# EUROPÄISCHE PATENTSCHRIFT

(11) **EP 2 807 706 B1**
(45) Veröffentlichungstag und Bekanntmachung des Hinweises auf die Patenterteilung: **16.10.2019**
(21) Anmeldenummer: 12806338.5
(22) Anmeldetag: 23.11.2012
(51) Int. Cl.: G02B 6/38, H01R 13/633, H01R 13/627

(54) **STECKVERBINDUNGSSYSTEM FÜR STECKVERBINDER**
PLUG CONNECTION SYSTEM FOR PLUG CONNECTORS
SYSTÈME DE CONNEXION PAR EMBOÎTEMENT POUR CONNECTEURS ENFICHABLES

(30) Priorität: 25.01.2012 DE 102012100615
(43) Veröffentlichungstag der Anmeldung: 03.12.2014
(73) Patentinhaber: HARTING Electronics GmbH, 32339 Espelkamp (DE)
(72) Erfinder: SCHMIDT, Hartmuth, 49179 Ostercappeln (DE); LÜCKEMEIER, Martin, 31603 Diepenau (DE)
(86) Internationale Anmeldenummer: PCT/DE2012/100358
(87) Internationale Veröffentlichungsnummer: WO 2013/110251

(56) Entgegenhaltungen:
- EP-A1- 2 037 543
- US-A1- 2009 130 887
- US-A1- 2009 264 003

## Beschreibung

Die Erfindung betrifft ein Steckverbindungssystem nach dem Oberbegriff des unabhängigen Anspruchs 1.

Ein derartiges Steckverbindungssystem wird benötigt, um eine Steckverbindung, insbesondere bei Lichtwellenleitern, gezielt gegeneinander zu stecken, um eine optimale Signalübertragung zu erreichen, ohne dass eine aufwändige Federkonstruktion benötigt wird, und um LWL-Stecksysteme unterschiedlicher Abmaße miteinander zu verbinden.

### Stand der Technik

Aus der DE 10 2009 011 388 B3 ist ein Steckverbinder für Lichtwellenleiter insbesondere zur Kontaktierung von opto-elektrischen Wandlern bekannt, bei dem separat federbeaufschlagte Ferrulen in je einem Ferrulengehäuse angeordnet sind, welche wiederum in einem mit einer weiteren Druckfeder beaufschlagten Schiebegehäuse angeordnet sind, um fertigungsbedingte Maßtoleranzen bei unterschiedlichen Einstecktiefen zwischen den Ferrulengehäusen und opto-elektrischen Wandlern ausgleichen zu können.

Aus der DE 20 2006 005 177 U1 ist ein Steckverbinder bekannt, welcher einen Verriegelungshaken aufweist, der in eine eingeformte Vertiefung des Gegensteckers verrastet. Ein Rastblech, an welchem der Verriegelungshaken vorgesehen ist, kann durch Zurückziehen einer Hülse angehoben werden, wodurch sich der Verriegelungshaken aus der Vertiefung löst.

Aus der DE 203 00 326 U1 ist ein Stecker bekannt, welcher mittels Wulsten in einen Gewindeabschnitt eines Gewindes eines Gegensteckers eingreifen kann. Die Wulsten sind dabei entsprechend der Form des Gewindes ausgebildet.

Aus der DE 10 2007 009 947 A1 ist ein Steckerelement bekannt, welches mittels eines Gewindeeingriffsteils in das Gewinde eines Gegensteckverbinders eingreift. Der Eingriff des Gewindeeingriffsteils kann mittels einer Betätigungshülse freigegeben oder gesperrt werden, wobei die Betätigungshülse an dem Gewindeeingriffsteil angeformte Gewindeeingriffsvorsprünge freigibt, oder diese sperrt.

Die Druckschrift DE 10 2010 001 018 A1 beschreibt einen optischen Steckverbinder, dessen Steckbereich durch ein drehbar und federbeaufschlagt daran gehaltenem Halteelement in der Lage ist, besonders große mechanische Toleranzen gegenüber einem Gegenstecker auszugleichen.

Aus der EP 2 037 543 A1 und der US 2009/0130887 A1 sind Steckverbindungssysteme für eine zweiteilige Steckverbindung bekannt.

Nachteilig wirkt sich dabei aus, das aufwändig konstruierte Systeme notwendig sind, um wie vorgesehen, zumindest umweltdichte LWL-Steckverbindungen, zu konstruieren, bei denen unterschiedliche mechanische Abmessungen von LWL-Bauelementen miteinander zu verbinden sind, und wobei eine Verkürzung bzw. Verlängerung des Leiters innerhalb des Steckverbindergehäuses realisiert sein muss.

### Aufgabenstellung

Der Erfindung liegt daher die Aufgabe zugrunde, ein Steckverbindungssystem für eine zweiteilige Steckverbindung auszubilden, die auf einfache Art eine Kontaktierung ermöglicht, bei der unterschiedliche bauliche Gegebenheiten der Kontaktsysteme überbrückt werden müssen und gleichzeitig eine kleine Baugröße bietet.

Diese Aufgabe wird durch den kennzeichnenden Teil des unabhängigen Anspruchs 1 gelöst.

Vorteilhafte Ausgestaltungen der Erfindung sind in den Unteransprüchen angegeben.

Bei der Erfindung handelt es sich um ein Steckverbindungssystem für eine zweiteilige Steckverbindung von zwei Steckverbindern, einem Steckverbinder und einem Gegenstecker, der hier insbesondere zur Montage an einem Gehäuse vorgesehen ist, und daher eine spezielle Form mit einem Flansch zum Aufschrauben aufweist.

Die innerhalb des Steckverbinders enthaltenen Kontakte, hier Lichtwellenleiter-Ferrulen, sind in einer Art aufgehängt, die einen Ausgleich von Fertigungstoleranzen und leicht unterschiedlichen Abmaßen der Ferrulen verschiedener Hersteller ausgleicht. Erfindungsgemäß beschränkt sich die Art der Kontakte jedoch nicht allein auf LWL-Ferrulen, weshalb diese prinzipiell nahezu gegen jede andere Arte von Kontakten austauschbar sind.

Die mit der Erfindung erzielten Vorteile bestehen insbesondere darin, dass diese Steckverbindung aufgrund der Ausbildung des mechanischen Zusammenspiels der beiden Steckverbinder, einen Soft-Steckmechanismus enthält, der eine sukzessive Kontaktierung von elektrischen und optischen Verbindungen ermöglicht.

Des Weiteren ist von Vorteil, dass mit dem Steckvorgang nach einer ersten Zusammenfügungsphase der beiden Steckverbinder eine sofortige Verrastung der Steckverbindung erfolgt. Dies wird vorteilhaft mit einem Rastmechanismus bewirkt, bei dem Rasthaken auf dem einen Steckverbinder in entsprechende Rastrillenbereiche des anderen Steckverbinders einklinken.

Um eine sehr feine Auflösung für diese Rastverbindung zu erzielen, sind innerhalb des ersten Steckverbinders an einem Rastring mehrere Finger mit daran angefügten Rasthaken angeordnet. Während an dem zweiten Steckverbinder mehrere Rastrillenbereiche vorgesehen sind, in die die Rasthaken beim Steckvorgang einklinken können. Dabei sind die Rastrillen derartig auf dem Steckverbinder angeordnet, dass die Rasthaken jeweils paarig und gegenüberliegend darauf zugreifen und dass mehrere Rastrillen umfänglich auf diesem Steckverbinder vorgesehen sind, wobei jedes der Rastrillenpaare einen definierten Versatz gegenüber dem oder den anderen Rastrillenpaar(en) aufweist. Somit ist gewährleistet, dass stets nur ein Rasthakenpaar komplett in einem Rastrillenpaar eingreift, während die anderen Rasthakenpaare nur teilweise auf den Zahnflanken der entsprechenden Rastrillen aufsetzten.

Durch diese umfänglich alternierende Verrastung ist eine sehr vorteilhafte und feine Auflösung bei einer axialen Schiebebewegung der beiden Steckverbinder zueinander möglich.

Dies ist insbesondere bei Steckverbindern von Vorteil, die optische Steckverbindungen kontaktieren, da hierbei sichergestellt sein muss - insbesondere wenn unterschiedliche Fabrikate mit unterschiedlichen Abmaßen kombiniert werden - dass eine optimale gegenseitige Kontaktierung der optischen Koppelflächen sicherzustellen ist.

Durch den neuartigen Verrastungsmechanismus des erfindungsgemäßen Steckverbindungssystems ist ein im Stand der Technik bereits bekanntes, aufwändig konstruiertes, federbeaufschlagtes System zur Aufnahme der Kontaktelemente nicht weiter nötig.

Vorzugsweise ist die Steckverbindung in einer hexagonalen Form ausgeführt, so dass unterschiedliche Stecksysteme auf einfache Weise mittels einer darin einzufügenden Kontakthülse sogleich verdrehsicher einsetzbar sind.

Unabhängig davon ist jedoch querschnittsmäßig auch jede weitere sinnvolle Formgebung von einer eckigen über ein Vieleck bis zur runden Form für diese Art einer lösbaren Rastverbindung denkbar.

Weiterhin besteht die Möglichkeit, die Finger mit den Rasthaken des Rastringes paarweise mit abgestuften Längen herzustellen, die dann auf gleichmäßig von der Steckkante am Gegenstecker angeordnete Rastrillenbereiche treffen.

Weiterhin besteht die Möglichkeit, die Finger mit den Rasthaken des Rastringes paarweise in abgestuften Abständen zur Steckerkante herzustellen, die dann auf gleichmäßig von der Steckkante am Gegenstecker angeordnete Rastrillenbereiche treffen.

### Ausführungsbeispiel

Ein Ausführungsbeispiel der Erfindung ist in der Zeichnung dargestellt und wird im Folgenden näher erläutert. Es zeigen:
- Fig. 1: eine auseinandergezogene Schnittdarstellung einer Steckverbindung;
- Fig. 2: eine detaillierte Darstellung zur Funktionsweise der Steckverbinderverrastung in einer Schnittdarstellung;
- Fig. 3: eine detaillierte Darstellung der Verrastungsbereiche der Steckverbindung in einer Schnittdarstellung; und
- Fig. 4: eine detaillierte, räumliche Teilschnittdarstellung eines Steckverbinders.

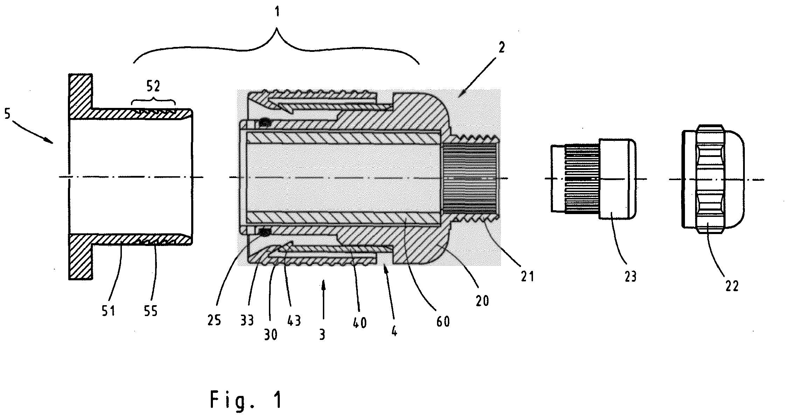

In der Fig.1 ist eine Steckverbindung 1 in einer auseinandergezogenen Schnittdarstellung gezeigt, die aus einem Steckverbinder 2 und einem Gegenstecker 5 gebildet ist, wobei der Steckverbinder 2 einen Steckerkörper 20, einen Rastring 40 und einen Schiebering 30 sowie eine Kabelverschraubung 21 umfasst. Wobei die Kabelverschraubung mit einer Druckschraube 22, die einen Dichteinsatz 23 zum umweltdichten Verschließen aufweist, vervollkommnet wird.

Weiterhin ist ein Hülseneinsatz 60 vorgesehen, in dem hier nicht weiter gezeigte Kontaktelemente zum Einsatz gelangen.

Der Rastring 40 wird auf dem Steckerkörper 20 entweder als separates Teil mittels einiger Verrastungshaken 24 verrastend aufgeschoben oder er ist einstückig mit dem Steckerkörper verbunden.

Der Rastring 40 ist aus einem Ring 41 gebildet, an dem mehrere axial ausgerichtete Finger 42 angeformt sind, deren freie Enden wiederum ins Zentrum wirkende Rasthaken 43 aufweisen.

Oberhalb des Rastringes 40 ist eine als Schiebering 30 bereichsweise verschiebbare Außenhülse 3 unverlierbar auf dem Steckerkörper 20 angeordnet.

Der Schiebering 30 weist steckseitig mehrere nach innen wirkende Öffnungshaken 33 auf, mittels derer die Verrastung der Steckverbindung wieder aufgehoben werden kann. Dabei greifen beim Zurückziehen des Schieberinges 30 die steckseitig angeformten Öffnungshaken 33 unter die Rasthaken 43 der Finger 42 des Rastringes 40 und hebeln diese aus den Rastrillen 53 heraus, so dass der Steckverbinder 2 von der Steckhülse 51 abgezogen werden kann.

Des Weiteren ist ein O-Ring 25 auf der Steckseite des Steckerkörpers 20, eingelassen in eine Nut, vorgesehen, zur Abdichtung der Steckkontakte im Inneren der Steckerhülse 51 und des Steckerkörpers 20.

Weiterhin ist in der Schnittdarstellung der Gegenstecker 5 gezeigt der hier als Flanschgehäuse ausgebildet ist, um an größeren Gehäusen oder ähnlichem angeschraubt zu werden.

Vorgesehen ist als Gegenstecker jedoch auch eine Steckerform, die als Kabelverbindung, dem gezeigten Steckverbinder 1 ähnlich ist.

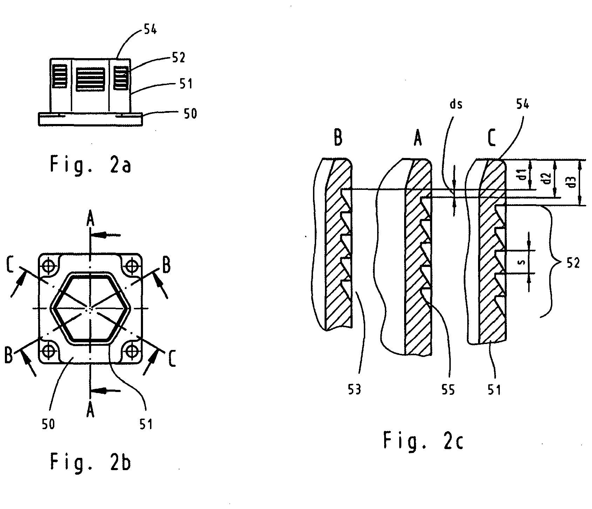

Die Fig. 2a, 2b, 2c zeigt Details zur Funktionsweise der Steckverbinder - Verrastung.

Dabei sind drei Paare von identischen Fingern 42 am Rastring 40 vorgesehen, die auf eine hexagonale Struktur der Steckhülse 51 aufgeteilt sind, wobei auf jeder der Seiten des hier als Flanschgehäuse 50 ausgebildeten Gegensteckers Rastrillenbereiche 52 angeordnet sind.

In der Draufsicht der Fig. 2b sind die paarigen Flächen A-A, B-B und C-C gezeigt, die zusammengefügt die hexagonale Steckhülse 51 bilden.

In der Fig. 2c sind ausschnittsweise einige Rastrillenbereiche der Steckhülse 51 mit der Bezeichnung A, B, C gezeigt, die lediglich eine Paarhälfte der Rillenbereiche gezeigt.

Interessant dabei ist die Abstufung der Rastrillen untereinander, die hier mit d1, d2, d3 bezeichnet sind, und den jeweiligen Abstand der ersten Rastrille eines Rastrillenbereiches hier B, A, C von der Steckkante 54 der Steckhülse 51.

Wobei der Abstand zwischen d1 und d2 sowie d2 und d3 mit ds bezeichnet ist, der letztlich den effektiven und damit den kleinsten Rastabstand beim Verschieben des Steckverbinders auf der Steckhülse des Gegensteckers darstellt.

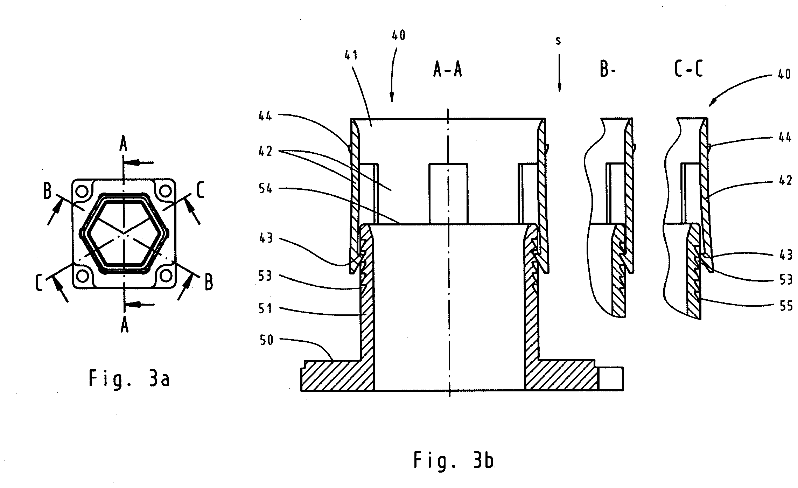

Die Auswirkungen dieser Abstufungen sind in der Fig. 3a, 3b näher gezeigt. Hier ist ein Teil des Rastringes 40 des Steckverbinders 2 dargestellt, zusammen mit der Steckhülse 51 des Flanschgehäuses bzw. des Gegensteckers 50.

So zeigt das Rasthakenpaar in der Darstellung A-A einen Rasthaken 43 der etwa auf einem Drittel der Sägezahnflanke 55 unterhalb der Rastrille 53' aufliegt, während in der Darstellung B-B der Rasthaken 43 exakt oder formschlüssig in die Rastrille 53' einhakt, und in der Darstellung C-C der Rasthaken 43 etwa auf einem Drittel der Sägezahnflanke 55 oberhalb der Rastrille 53' aufliegt.

Mit jedem weiteren Aufschieben des Rastringes 40, respektive dem Steckverbinder 2 auf den Gegenstecker 5, klickt jeweils ein nächstes Rasthakenpaar komplett in die folgende Rastrille 53, verweilt dort, bis die nächste Rastrille 53 durch ein weiteres Einschieben des Steckverbinders beaufschlagt wird.

Somit kann mit einer sehr feinen Abstufung, die hier bei etwa 0,5 mm liegt und den effektiven Rastabstand ds darstellt, eine axiale Verschiebung bei gleichzeitiger Verrastung der Steckverbindung erfolgen.

Das bedeutet, dass der vorgegebene Abstand s der Rastrillen 53 beim Rastvorgang des Steckverbinders 2 auf dem Gegenstecker 5 effektiv auf einen kleineren Rastabstand ds reduziert wird. Der Abstand ds ergibt sich dabei aus dem Rastrillenabstand s geteilt durch die Anzahl der unterschiedlichen Rastrillenpaare.

Bei einer optischen Steckverbindung ist so z.B. ein eventuell zusätzlicher axialer Weg, der durch bauteilebedingte Unterschiede entsteht, ausgleichbar, ein Unterschied der ansonsten nur mittels einer zusätzlichen Druckfeder realisierbar wäre.

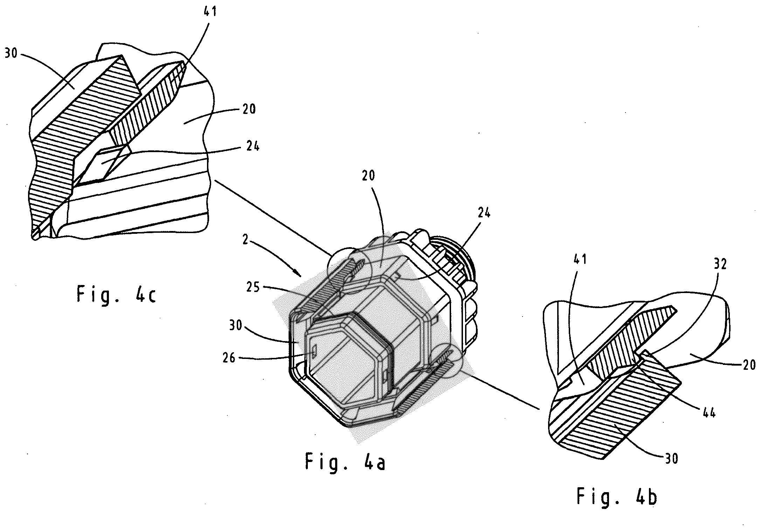

In der Fig. 4a ist ein Steckverbinder 2 in einem räumlichen Teilschnitt dargestellt, wobei die Fig. 4b und die Fig. 4c jeweils eine Detailansicht des verrasteten Schiebering 30, bzw. des verrasteten Rastring 40 zeigen. Erkennbar in der Fig. 4a ist der Teilschnitt in räumlicher Darstellung, in welchem lediglich der Schiebering 30 und die Rastring 40 zu etwa der Hälfte geschnitten sind. Der Steckerkörper 20 und der O-Ring 25 sind ungeschnitten dargestellt.

Die Verrastung des Schiebering 30 auf dem Rastring 40 ist in der Fig. 4b im Detail gezeigt. Darin sind Rastvorsprünge 32 am Schiebering 30 zu erkennen, welche hinter Ringverrastungshaken 44 am Rastring 40 verrasten. Dadurch ist der Schiebering 30 unverlierbar auf dem Rastring 40 gehalten und kann zum Entrasten der Steckverbindung 1 noch gegen die Steckrichtung verschoben werden. Die Ringverrastungshaken 44 sowie die Rastvorsprünge 32 sind mehrfach über den Umfang des Rastrings 40 verteilt.

In der Fig. 4c ist die Verrastung des Rastrings 40 auf dem Steckerkörper 20 detailiert gezeigt. Auch hier sind über den Umfang des Steckerkörpers 20 mehrere Mittel zur Verrastung verteilt. Diese Mittel werden von Verrastungshaken 24 gebildet, hinter welchen der Ring 41 des Rastrings 40 verrastet und so fixiert wird.

### Bezugszeichenliste

- 1: Steckverbindung
- 2: Steckverbinder
- 3: Außenhülse
- 4: Rasteinheit
- 5: Gegenstecker

- 20: Steckerkörper in Steckverbinder 2
- 21: Kabelverschraubung
- 22: Druckschraube
- 23: Dichteinsatz
- 24: Verrastungshaken für 40
- 25: O-Ring
- 26: Rastausnehmung

- 30: Schiebering = Außenhülse 3
- 31: Ringverrastung auf Steckerkörper
- 32: Rastvorsprünge zum Halten von 40
- 33: Öffnungshaken

- 40: Rastring = Rasteinheit 4
- 41: Ring
- 42: Finger
- 43: Rasthaken
- 44: Ringverrastungshaken für 30
- 45: Rasthakenpaar A-A, B-B, C-C

- 50: Flanschgehäuse = Gegenstecker 5
- 51: Steckhülse eckig
- 52: Rastrillenbereiche, paarweise versetzt gegeneinander
- 53: Rastrillen
- 54: Steckkante an der Steckhülse,
- 55: Sägezahnflanke

- d1,d2,d3: Abstand der Rastrillenbereiche 52 zur Kante 54
- s: Rastrillenabstand
- ds: effektiver Rastabstand

## Patentansprüche

1. Steckverbindungssystem für eine zweiteilige Steckverbindung (1) mit einem Steckverbinder (2) und einem Gegenstecker (5),
wobei der Steckverbinder (2) eine Außenhülse (3) mit einer dazwischen angeordneten Rasteinheit (4), die auf einem Steckerkörper (20) angeordnet sind aufweist,
wobei der Steckverbinder (2) an seiner Steckseite einen Schiebemechanismus zum Verrasten und Entrasten mit dem Gegenstecker (5) aufweist,
wobei die Rasteinheit (4) als Rastring (40) einen Ring (41) mit mehreren daran axial ausgerichteten Fingern (42) umfasst, an deren Enden Rasthaken (43) angeformt sind,
wobei die Außenhülse (3) als Schiebering (30) um einen bestimmten Weg, beabstandet vom Rastring (40), auf dem Steckerkörper (20) axial verschiebbar ist,
wobei der Gegenstecker (5) ein Gehäuse (50) umfasst, dessen Steckseite als Steckhülse (51) mit einer Steckkante (54) ausgeformt ist, auf der umfänglich beabstandet mehrere Rastrillenbereiche (52) angeordnet sind,
**dadurch gekennzeichnet, dass** die Rastrillenbereiche (52) aus mehreren mit einem vorgegebenen Abstand (s) beabstandeten Rastrillen (53) gebildet sind, wobei die jeweils ersten Rastrillen (53) der Rastrillenbereiche (52) unterschiedliche Abstände (d1, d2, d3) zu der Steckkante (54) der Steckhülse (51) aufweisen,
wobei die Differenz zwischen jeweils zwei beim Steckvorgang von den Rasthaken (43) unmittelbar hintereinander eingegriffenen ersten Rastrillen (53) kleiner ist als der vorgegebene Abstand (s), und
wobei die Differenz einen effektiven Rastabstand (ds) darstellt, mit dem der Steckverbinder (2) beim Schieben auf den Gegenstecker (5) einrastet.

2. Steckverbindungssystem nach Anspruch 1, **dadurch gekennzeichnet, dass** die Steckverbindung (1) mittels des Schieberinges (30) wieder entriegelbar ist, wobei beim Zurückziehen des Steckverbinders (2) im Schiebering (30) angeordnete Öffnungshaken (33), die Rasthaken (43) aus den Rastrillen (53) des Gegensteckers (5) herausheben.

3. Steckverbindungssystem nach Anspruch 1, **dadurch gekennzeichnet, dass** die Rastrillenbereiche (52) in einer symmetrischen, umfänglichen und paarweisen Anordnung (A-A, B-B, C-C) auf der Steckhülse (54) des Gegensteckers (5) angeordnet sind.

4. Steckverbindungssystem nach Anspruch 1, **dadurch gekennzeichnet, dass** die Rastrillenbereiche (52) auf dem Gegenstecker (5) jeweils paarweise auf gegenüberliegenden Flächen angeordnet sind, und bezüglich ihres Abstandes zur Steckkante (54) paarweise identisch ausgerichtet sind.

5. Steckverbindungssystem nach Anspruch 1, **dadurch gekennzeichnet, dass** der Steckverbinder (2) und der Gegenstecker (5) eine Sechskantform aufweist, wobei drei gleichartige Rasthakenpaare (45) auf die Rillenbereiche (52) auf dem Gegenstecker (5) zugreifen.

## Claims

1. Plug-in connection system for a two-part plug-in connection (1) comprising a plug-in connector (2) and a mating plug (5),
wherein the plug-in connector (2) has an outer sleeve (3) with a latching unit (4) which is arranged therebetween, which outer sleeve and latching unit are arranged on a plug body (20),
wherein the plug-in connector (2), on its plug-in side, has a sliding mechanism for latching with and unlatching from the mating plug (5),
wherein the latching unit (4), as latching ring (40), comprises a ring (41) with a plurality of fingers (42) which are axially oriented thereon and at the ends of which latching hooks (43) are integrally formed, wherein the outer sleeve (3), as sliding ring (30), can be axially displaced on the plug body (20) by a certain distance, spaced apart from the latching ring (40), wherein the mating plug (5) comprises a housing (50), the plug-in side of which, as plug-in sleeve (51), is formed with a plug-in edge (54) on which a plurality of latching groove regions (52) are arranged in a circumferentially spaced apart manner,
**characterized in that**
the latching groove regions (52) are formed from a plurality of latching grooves (53) which are spaced apart at a prespecified distance (s), wherein
the respectively first latching grooves (53) of the latching groove regions (52) are at different distances (d1, d2, d3) from the plug-in edge (54) of the plug-in sleeve (51),
wherein the difference between in each case two first latching grooves (53), with which the latching hooks (43) engage immediately one after the other during the plug-in process, is smaller than the prespecified distance (s), and wherein
the difference constitutes an effective latching distance (ds) at which the plug-in connector (2) latches in when it is pushed onto the mating plug (5).

2. Plug-in connection system according to Claim 1, **characterized in that** the plug-in connection (1) can be unlocked again by means of the sliding ring (30), wherein, when the plug-in connector (2) is withdrawn, opening hooks (33) which are arranged in the sliding ring (30) lift the latching hooks (43) out of the latching grooves (53) of the mating plug (5).

3. Plug-in connection system according to Claim 1, **characterized in that** the latching groove regions (52) are arranged in a symmetrical, circumferential and paired arrangement (A-A, B-B, C-C) on the plug-in sleeve (54) of the mating plug (5).

4. Plug-in connection system according to Claim 1, **characterized in that** the latching groove regions (52) are arranged on the mating plug (5) in each case in pairs on opposite surfaces and are oriented in an identical manner in pairs with respect to their distance from the plug-in edge (54).

5. Plug-in connection system according to Claim 1, **characterized in that** the plug-in connector (2) and mating connector (5) have an hexagonal shape, wherein three identical latching hook pairs (45) take hold in the groove regions (52) on the mating plug (5).

## Revendications

1. Système de liaison par enfichage destiné à une liaison par enfichage (1) en deux parties comprenant un connecteur enfichable (2) et un connecteur homologue (5),
le connecteur enfichable (2) comportant un manchon extérieur (3) pourvu d'une unité de verrouillage (4) qui est disposée entre eux et qui est placée sur un corps de connecteur (20),
le connecteur enfichable (2) comportant sur son côté d'enfichage un mécanisme coulissant destiné à se verrouiller au connecteur homologue (5) et à se déverrouiller de celui-ci,
l'unité de verrouillage (4) comprenant comme bague de verrouillage (40) une bague (41) pourvue d'une pluralité de doigts (42) orientés axialement aux
extrémités desquels sont formés des crochets de verrouillage (43),
le manchon extérieur (3) pouvant coulisser axialement, sous la forme d'une bague coulissante (30), sur le corps de connecteur (20) sur une distance déterminée en étant espacé de la bague de verrouillage (40),
le connecteur homologue (5) comprenant un boîtier (50) dont le côté d'enfichage est réalisé sous la forme d'un manchon enfichable (51) pourvu d'un bord d'enfichage (54) sur lequel plusieurs zones de rainures de verrouillage (52) sont disposées périphériquement à distance les unes des autres,
**caractérisé en ce que**
les zones de rainures de verrouillage (52) sont formées d'une pluralité de rainures de verrouillage (53) espacées d'une distance prédéterminée (s), les premières rainures de verrouillage respectives (53) des zones de rainures de verrouillage (52) étant situées à des distances différentes (d1, d2, d3) du bord d'enfichage (54) du manchon enfichable (51),
la différence entre deux premières rainures de verrouillage (53) engagées avec les crochets de verrouillage (43) immédiatement les unes derrière les autres lors du processus d'enfichage étant inférieure à la distance prédéterminée (s), et la différence représentant une distance de verrouillage effective (ds) avec laquelle le connecteur enfichable (2) s'engage lors du coulissement sur le connecteur homologue (5).

2. Système de liaison par enfichage selon la revendication 1, **caractérisé en ce que** la liaison par enfichage (1) peut être à nouveau déverrouillée au moyen de la bague coulissante (30), des crochets d'ouverture (33) disposés dans la bague coulissante (30) soulevant les crochets de verrouillage (43) des rainures de verrouillage (53) du connecteur homologue (5) lors du retrait du connecteur enfichable (2).

3. Système de liaison par enfichage selon la revendication 1, **caractérisé en ce que** les zones de rainures de verrouillage (52) sont disposées suivant un agencement par paires (A-A, B-B, C-C) symétrique périphérique sur le manchon enfichable (54) du connecteur homologue (5).

4. Système de liaison par enfichage selon la revendication 1, **caractérisé en ce que** les zones de rainures de verrouillage (52) sont disposées par paires sur des surfaces opposées sur le connecteur homologue (5) et sont orientées par paires de manière identique quant à leur distance au bord d'enfichage (54).

5. Système de liaison par enfichage selon la revendication 1, **caractérisé en ce que** le connecteur enfichable (2) et le connecteur homologue (5) ont une forme hexagonale, trois paires de crochets de verrouillage similaires (45) accédant aux zones de rainures (52) situées sur le connecteur homologue (5).
